# EUROPÄISCHE PATENTSCHRIFT

(11) **EP 3 964 053 B1**
(45) Veröffentlichungstag und Bekanntmachung des Hinweises auf die Patenterteilung: **06.05.2026**
(21) Anmeldenummer: 20194005.3
(22) Anmeldetag: 02.09.2020
(51) Int. Cl.: A01G 20/47, E01H 1/08

(54) **RÜCKENGETRAGENES BLASGERÄT**
BACK-MOUNTED BLOWING DEVICE
APPAREIL DE SOUFFLAGE DORSAL

(43) Veröffentlichungstag der Anmeldung: 09.03.2022
(73) Patentinhaber: Andreas Stihl AG & Co. KG, 71336 Waiblingen (DE)
(72) Erfinder: DETTLING, Andreas, 70599 Stuttgart (DE); KARL, Dennis, 71691 Freiberg a.N. (DE); EHRLER, Denis, 73249 Wernau (DE); FRIEDRICH, Sebastian, 71404 Korb (DE); KLINGLER, Simon, 70188 Stuttgart (DE)
(74) Vertreter: Patentanwälte Ruff, Wilhelm, Beier, Dauster & Partner mbB

(56) Entgegenhaltungen:
- EP-A1- 3 420 807
- EP-A1- 3 682 730
- WO-A1-2019/206581
- US-A1- 2020 154 962

## Beschreibung

Die Erfindung bezieht sich auf ein rückengetragenes Blasgerät nach dem Oberbegriff des Anspruchs 1.

Ein derartiges Blasgerät umfasst eine Rückentrage mit einem Tragrahmen, ein Blasrohr mit einem an einer Rückseite des Tragrahmens gehaltenen trageseitigen Rohrabschnitt und einem handseitigen Rohrabschnitt, der sich an einem ersten Seitenbereich des Tragrahmens vorbei erstreckt, einen Antriebsmotor, eine Energiequelle für den Antriebsmotor und ein vom Antriebsmotor angetriebenes Axialgebläse, das eine axiale Gebläseachse aufweist und im trageseitigen Rohrabschnitt des Blasrohrs angeordnet ist.

Ein solches Blasgerät wird im Betrieb von einem Benutzer auf seinem Rücken getragen. Dazu besitzt die Rückentrage üblicherweise Trage- bzw. Schultergurte, die am Tragrahmen befestigt sind und mit denen der Benutzer die Rückentrage mit dem Tragrahmen nach Art eines Rucksacks schultern und so auf seinem Rücken tragen kann. Unter trageseitigem Rohrabschnitt und handseitigem Rohrabschnitt sind vorliegend ein dem Tragrahmen zugeordneter, d.h. sich in dessen Umgebung befindender, Rohrabschnitt bzw. ein auf Seiten einer Benutzerhand befindlicher Rohrabschnitt zu verstehen. Im Gebrauch kann der Benutzer folglich das Blasrohr am handseitigen Rohrabschnitt mit einem oder beiden Händen greifen bzw. bedienen. Am Tragrahmen befinden sich die wesentlichen weiteren Komponenten des Blasgerätes, insbesondere der trageseitige Rohrabschnitt mit dem Axialgebläse, der das Axialgebläse antreibende Antriebsmotor und die Energiequelle für den Antriebsmotor.

Blasgeräte dieser und ähnlicher Art sind als ausblasende Blasgeräte, insbesondere als Laubblasgeräte, üblicherweise auch als Laubbläser bezeichnet, und als saugende Blasgeräte in Gebrauch, z.B. als rückengetragene Staubsauger. Bei den ausblasenden Blasgeräten bildet der trageseitige Rohrabschnitt einen lufteinlassseitigen Rohrabschnitt, d.h. einen Abschnitt des Blasrohrs, in dem sich der Eintritt für ein im Blasrohr geführtes Blasmedium befindet, während der handseitige Rohrabschnitt einen luftauslassseitigen Rohrabschnitt bildet, d.h. einen Abschnitt des Blasrohrs, in dem sich der Austritt für das Blasmedium befindet. Bei den saugenden Blasgeräten bildet umgekehrt der handseitige Rohrabschnitt den lufteintrittseitigen Rohrabschnitt, während der trageseitige Rohrabschnitt den luftaustrittseitigen Rohrabschnitt bildet. Zum leichteren Verständnis wird vorliegend auf Begrifflichkeiten für den ausblasenden Typ von Blasgeräten Bezug genommen. Diese Begrifflichkeiten sind für den saugenden Typ von Blasgeräten entsprechend modifiziert zu verstehen, d.h. die Lufteintrittsseite ist dann die Luftaustrittsseite, ein Lufteinlasskanal ist ein Luftauslasskanal etc. Üblicherweise ist das Blasmedium Luft, in speziellen Fällen kann es sich jedoch auch um ein anderes Blasmedium handeln, wobei der Einfachheit halber vorliegend die auf das Blasmedium Luft Bezug nehmenden Begrifflichkeiten, wie lufteintrittsseitig, luftaustrittsseitig, Lufteinlasskanal etc., zur Bezeichnung entsprechender Blasgerätkomponenten in einem allgemeinen Sinn zu verstehen sind, der auch diese anderen Fälle umfasst, in denen das Blasmedium nicht Luft ist.

Für solche Blasgeräte sind alternativ Ausführungen mit Verbrennungsmotor als Gebläseantriebsmotor und einem Benzintank als zugehörige Energiequelle und Ausführungen mit Elektromotor als Gebläseantriebsmotor und einem Akkupack als zugehörige Energiequelle gebräuchlich, wobei vorliegend der Begriff Akkupack in einem allgemeinen Sinn zur Bezeichnung einer beliebigen herkömmlichen Art von elektrischer Batterie zu verstehen ist.

Soweit vorliegend Orientierungsbegriffe wie Oberseite, Unterseite, Vorderseite, Rückseite, Vertikalrichtung und Horizontalrichtung etc. für das Blasgerät und spezieller für die Rückentrage bzw. den Tragrahmen verwendet werden, beziehen sich diese auf das Blasgerät in seiner Traglage auf dem Rücken eines Benutzers. Die Oberseite ist dann die vertikal oben liegende Seite, die Unterseite die vertikal unten liegende Seite, Längsseiten des Blasgerätes bzw. der Rückentrage verlaufen seitlich links und rechts in im Wesentlichen vertikaler Richtung, Querseiten des Blasgerätes bzw. der Rückentrage verlaufen im Wesentlichen horizontal quer oben und unten, die Vorderseite ist die dem tragenden Benutzer zugewandte Seite, die Rückseite ist die vom tragenden Benutzer abgewandte Seite des Blasgerätes bzw. der Rückentrage, und die Richtung von der Vorderseite zur Rückseite bzw. von der Rückseite zur Vorderseite ist als Vorn-Hinten-Richtung bezeichnet.

Die Offenlegungsschrift EP 3 225 098 A1 offenbart ein ausblasendes elektrisches Blasgerät, bei dem ein Elektromotor und das Axialgebläse mit gemeinsamer axialer Motor-/Gebläseachse in einen gemeinsamen Gebläsekörper integriert sind, der im trageseitigen Rohrabschnitt mit zur Längsrichtung dieses Rohrabschnitts paralleler axialer Gebläseachse angeordnet ist, wobei vorzugsweise zwei Blasrohre vorgesehen sind, die sich zur beidhändigen Bedienung durch den Benutzer mit ihren handseitigen Rohrabschnitten an einem linken bzw. rechten Seitenbereich des Tragrahmens vorbei erstrecken. Der jeweilige trageseitige Rohrabschnitt ist derart am Tragrahmen angeordnet, dass sich seine Längsachse und damit die Gebläseachse des eingebauten Axialgebläses parallel zu einer Rückseitenfläche der Rückentrage bzw. des Tragrahmens erstreckt. Alternativ zu einer Anordnung der trageseitigen Rohrabschnitte im Wesentlichen vertikal an der linken bzw. rechten Seite des Tragrahmens bzw. der Rückentrage neben einem an der Rückseite des Tragrahmens gehaltenen Akkupack wird eine Positionierung des jeweiligen trageseitigen Rohrabschnitts an der Rückseite des Tragrahmens unterhalb des Akkupacks mit einem horizontalen Verlauf oder einem gegenüber der Horizontalen und der Vertikalen schrägen Verlauf der Gebläseachse vorgeschlagen. Dabei erstreckt sich der jeweilige trageseitige Rohrabschnitt vom einen Seitenbereich des Tragrahmens, an dem sich dieser trageseitige Rohrabschnitt vorbei erstreckt, entlang der Rückseite des Tragrahmens in Richtung zum gegenüberliegenden Seitenbereich und endet mit Abstand vor diesem mit einem sich konisch zu einem axialen Blasrohr-Endabschluss als Lufteintritt hin verjüngenden Endbereich.

Die Offenlegungsschrift EP 2 684 446 A2 offenbart ein rückengetragenes Laubblasgerät mit einem Radialgebläse, das zusammen mit einem zugehörigen Antriebsmotor derart an einem Tragrahmen einer Rückentrage gehalten ist, dass eine gemeinsame Antriebsachse von Motor und Radialgebläse mit einer vertikalen Hauptrichtungskomponente unter einem spitzen Winkel zwischen ca. 5° und ca. 35° zu einer Tragrahmenebene verläuft, in welcher der Tragrahmen im Wesentlichen liegt, wobei die Antriebsachse die Tragrahmenebene in einem Punkt schneidet, der nahe einer Oberseite des Tragrahmens liegt.

Die Offenlegungsschrift US 2016/0208449 A1 offenbart ein rückengetragenes elektrisches Blasgerät, bei dem ein Akkupack an einem Tragrahmen einer Rückentrage gehalten ist, während ein Axialgebläse und ein zugehöriger elektrischer Antriebsmotor in einem handgeführten Blasrohr angeordnet sind, das über eine flexible Stützverbindung und ein Elektrokabel mit dem rückgetragenen Akkupack verbunden ist.

Die Offenlegungsschrift EP 3 682 730 A1 offenbart eine Gebläseeinheit für ein tragbares, handgeführtes Blasgerät mit einem rohrförmigen Gehäuseabschnitt, in dem ein Axialgebläse nebst zugehörigem Antriebsmotor aufgenommen ist, wobei mit axialem Abstand vor einer Ansaugöffnung eine Luftleitplatte angeordnet ist, deren Außenabmessungen größer als die Außenabmessungen der Ansaugöffnung sind. Zwischen der Luftleitplatte und einem Außenrand des Gehäuseabschnittes ist ein mit einem Lufteinlassgitter bzw. Schutzgitter versehener, ringförmiger Ansaugspalt ausgebildet, von dem ein Luftzufuhrkanal weiterführt, der radial nach außen von einer Rohrwand des Gehäuseabschnitts und radial nach innen von einem Luftleitkonus begrenzt ist, der sich zur Ansaugöffnung hin an die Luftleitplatte anschließt.

Verschiedene Blasgeräte der eingangs genannten Art sind in den Offenlegungsschriften EP 3 420 807 A1, WO 2019/206581 A1 und US 2020/0154962 A1 offenbart.

Der Erfindung liegt als technisches Problem die Bereitstellung eines rückengetragenen Blasgerätes der eingangs genannten Art zugrunde, das gegenüber dem oben erwähnten Stand der Technik Vorteile insbesondere hinsichtlich der Anordnung des trageseitigen Rohrabschnitts des Blasrohrs am Tragrahmen und/oder hinsichtlich der Blasmediumführung bietet.

Die Erfindung löst dieses Problem durch die Bereitstellung eines rückengetragenen Blasgerätes mit den Merkmalen des Anspruchs 1. Vorteilhafte Weiterbildungen der Erfindung, die zur Lösung dieses und weiterer Probleme beitragen, sind in den Unteransprüchen angegeben, deren Inhalt hiermit vollumfänglich durch Verweis zum Inhalt der Beschreibung gemacht wird.

Beim vorliegenden Blasgerät verläuft der trageseitige Rohrabschnitt des Blasrohrs mit einer Hauptrichtungskomponente in einer Tragequerrichtung des Tragrahmens und weist einen axialen Blasrohr-Endabschluss auf, der seitlich über einen dem ersten Seitenbereich abgewandten zweiten Seitenbereich des Tragrahmens hinaus vorsteht und/oder wenigstens teilumfangsseitig von einem Schutzringelement umgeben ist, das mit dem Tragrahmen verbunden ist. Unter Tragequerrichtung ist hierbei diejenige Richtung zu verstehen, die senkrecht zur Vorn-Hinten-Richtung ist und in Gebrauchslage des Blasgerätes auf dem Rücken eines Benutzers horizontal bzw. im Wesentlichen horizontal verläuft.

Bei dieser Konfiguration des Blasgeräts erstreckt sich folglich der trageseitige Rohrabschnitt des Blasrohrs mit seiner Längsrichtung parallel zur Tragequerrichtung des Tragrahmens oder zumindest überwiegend in dieser Tragequerrichtung des Tragrahmens, d.h. mit einer größeren Richtungskomponente in dieser Richtung als in einer dazu senkrechten Richtung, was eine günstige Voraussetzung für eine kompakte Anordnung dieses trageseitigen Blasrohrabschnitts am Tragrahmen der Rückentrage darstellt.

Indem sich der trageseitige Rohrabschnitt beim betreffenden Erfindungsaspekt mit seinem axialen Endabschluss seitlich, d.h. quer bzw. in lateraler Richtung, über den zugewandten Seitenbereich des Tragrahmens, d.h. dessen linken oder rechten Seitenbereich, hinaus vorsteht, kann der trageseitige Rohrabschnitt bei Bedarf sehr kompakt und platzsparend am Tragrahmen angeordnet sein, auch dann, wenn er in diesem axialen Endbereich eine konische Erweiterung in radial nach außen weisender Richtung aufweist, z.B. in Form eines Lufteinlasstrichters. Insbesondere braucht der trageseitige Rohrabschnitt nicht zwingend mit dem vollen Querschnitt bzw. Durchmesser seines konisch erweiterten Endabschlusses hinter dem Tragrahmen und/oder hinter anderen am Tragrahmen gehaltenen Blasgerätkomponenten platziert werden. Vielmehr kann dieser optional konisch erweiterte Endabschluss in Tiefenrichtung der Rückentrage, d.h. in der Vorn-Hinten-Richtung, mit dem Tragrahmen und/oder anderen daran gehaltenen Blasgerätkomponenten überlappend angeordnet sein.

Indem der axiale Blasrohr-Endabschluss des trageseitige Rohrabschnitts beim betreffenden Erfindungsaspekt von dem mit dem Tragrahmen verbundenen Schutzringelement umgeben ist, und zwar zumindest entlang eines Teils des Gesamtumfangs des Blasrohr-Endabschlusses, kann der Blasrohr-Endabschluss durch das ihn zumindest partiell umgebende Schutzringelement vor schädigenden Einflüssen von außen geschützt werden. Insbesondere kann das Schutzringelement einen Stoß- bzw. Fallschutz für diesen Blasrohr-Endabschluss gegenüber Stößen bereitstellen, die von außen einwirken können, z.B. wenn der Tragrahmen bzw. die Rückentrage versehentlich auf den Boden fällt oder vom Benutzer auf dem Boden abgestellt wird oder der Benutzer mit dem von ihm auf dem Rücken getragenen Blasgerät versehentlich gegen ein festes Hindernis stößt.

Erfindungsgemäß schließt die Gebläseachse einen Horizontalwinkel zwischen 2° und 15° mit einer vertikalen Tragequerebene des Tragrahmens ein. Unter der vertikalen Tragequerebene ist hierbei diejenige Vertikalebene senkrecht zur Vorn-Hinten-Richtung der Rückentrage bzw. des Tragrahmens zu verstehen, in welcher der Tragrahmen überwiegend liegt. In diesem Fall verläuft folglich die Gebläseachse und damit normalerweise auch der trageseitige Rohrabschnitt des Blasrohrs mit ihrer/seiner Längsrichtung in der Horizontalebene entsprechend schräg zur vertikalen Tragequerebene des Tragrahmens und damit zu dessen in der Horizontalebene liegenden Tragequerrichtung. Dies kann zu einer optimierten Platzierung des trageseitigen Blasrohrabschnitts und zur optimierten Blasmediumführung im trageseitigen Blasrohrabschnitt beitragen. Zudem kann durch diese Schrägstellung der Gebläseachse in Bezug auf den Tragrahmen das Schutzringelement mit seiner dem Tragrahmen zugewandten Seite entsprechend an der zugehörigen Tragrahmenseite vorstehen und in einem Fall, in welcher die Rückentrage mit dieser Seite, d.h. ihrer linken oder rechten Seite, voraus auf einem Untergrund aufschlägt, einen weitergehenden Stoßschutz bieten, indem er auftretende Aufprallkräfte speziell mit diesem vorstehenden Abschnitt auffängt und zum Tragrahmen weiterleitet.

In einer Ausgestaltung der Erfindung liegt der Horizontalwinkel speziell im Bereich zwischen 2° und 3°. Eine dadurch definierte Schräglage der Gebläseachse und damit auch des trageseitigen Blasrohrabschnitts gegenüber der Tragequerrichtung des Tragrahmens kann für bestimmte Blasgerätausführungen besonders günstig sein, insbesondere wiederum hinsichtlich optimierter Platzierung und/oder optimiertem Stoß- bzw. Fallschutz.

In einer Weiterbildung der Erfindung schließt die Gebläseachse einen Vertikalwinkel von höchstens 45° mit einer horizontalen Trageebene des Tragrahmens ein. Unter der horizontalen Trageebene ist dabei die von der Vorn-Hinten-Richtung und der Tragequerrichtung des Tragrahmens aufgespannte Ebene zu verstehen. Die Gebläseachse und damit in der Regel auch der trageseitige Blasrohrabschnitt verlaufen in diesem Fall horizontal oder gegenüber der Horizontalen um höchstens 45° schräg nach oben oder unten. Diese Lageorientierung der Gebläseachse bzw. des trageseitigen Blasrohrabschnitts ist für viele Blasgerätanwendungen optimal. In alternativen Konfigurationen ist die Gebläseachse mit überwiegend vertikalem Verlauf angeordnet, d.h. sie schließt dann einen Vertikalwinkel von mehr als 45° mit der horizontalen Trageebene des Tragrahmens ein.

In einer Ausgestaltung der Erfindung beträgt der Vertikalwinkel höchstens 10°. In dieser Konfiguration verläuft somit die Gebläseachse bzw. der trageseitige Blasrohrabschnitt in der Gebrauchslage des Blasgerätes auf dem Rücken eines Benutzers horizontal oder jedenfalls weitgehend horizontal, was sich für viele Anwendungen als optimal erweist.

In einer Weiterbildung der Erfindung weist der trageseitige Rohrabschnitt einen Krümmungsabschnitt aus steifem Rohrmaterial mit einem Krümmungswinkel kleiner als 90° auf. Die Wahl eines steifen Rohrmaterials für den Krümmungsabschnitt des trageseitigen Blasrohrabschnitts trägt zu einer guten Stabilität dieses Rohrabschnitts in diesem Krümmungsbereich bei, der beispielsweise einen Übergang zum handseitigen Rohrabschnitt bilden kann. Durch den gegenüber 90° kleineren Krümmungswinkel ergibt sich für diesen Krümmungsabschnitt eine Rohrbiegung und damit eine Umlenkung des hindurchgeführten Blasmediums, die geringer als eine rechtwinklige Krümmung ist, was bei entsprechenden Anwendungen für die Rohrführung und die Führung des Blasmediums im Blasrohr günstig sein kann. Vorteilhaft kann dieser Krümmungswinkel bei Bedarf auf eine gewisse Schrägstellung der Gebläseachse bezüglich der Tragequerrichtung des Tragrahmens derart abgestimmt sein, dass der Krümmungsabschnitt in Richtung handseitigem Blasrohrabschnitt im Wesentlichen parallel zur Vorn-Hinten-Richtung endet. In alternativen Ausführungen ist der Krümmungsabschnitt aus einem biegeweichen Rohrmaterial und/oder mit einem Krümmungswinkel von 90° oder mehr gebildet.

In einer Ausgestaltung der Erfindung liegt der Krümmungswinkel speziell im Bereich zwischen 60° und 85°. Dies stellt für bestimmte Blasgerätanwendungen eine optimale Krümmung für den trageseitigen Blasrohrabschnitt dar.

In einer Weiterbildung der Erfindung ist der Antriebsmotor ein Elektromotor, und die Energiequelle beinhaltet einen am Tragrahmen gehaltenen Akkupack. In dieser Konfiguration bildet das Blasgerät folglich ein elektrisches Blasgerät. In alternativen Ausführungen kann das Blasgerät z.B. einen Verbrennungsmotor als Antriebsmotor und einen Benzintank als Energiequelle beinhalten.

In einer Weiterbildung der Erfindung besitzt der Antriebsmotor eine zur Gebläseachse parallele Motorachse und/oder ist im trageseitigen Rohrabschnitt angeordnet. Diese Konfiguration bietet eine günstige Voraussetzung für eine kompakte Anordnung von Antriebsmotor und Axialgebläse z.B. als eine integrierte Motor/Gebläse-Baueinheit im trageseitigen Blasrohrabschnitt. In alternativen Ausführungen ist der Antriebsmotor mit zur Gebläseachse nicht-paralleler Motorachse und/oder außerhalb des trageseitigen Rohrabschnitts des Blasrohrs angeordnet.

In einer Ausgestaltung der Erfindung sind der Antriebsmotor und das Axialgebläse in einem gehäusebildenden Bereich des trageseitigen Rohrabschnitts angeordnet. Dies realisiert eine für viele Anwendungsfälle günstige Integration von Antriebsmotor und Axialgebläse in einem gemeinsamen Gehäuse, das in diesem Fall gleichzeitig als ein Teil des trageseitigen Blasrohrabschnitts fungiert, über den der trageseitige Blasrohrabschnitt am Tragrahmen gehalten werden kann. In alternativen Ausführungen sind Antriebsmotor und Axialgebläse in einem gemeinsamen Gehäuse angeordnet, das im Inneren des trageseitigen Blasrohrabschnitts aufgenommen ist.

In einer Weiterbildung der Erfindung ist der trageseitige Rohrabschnitt durch ein hülsenförmiges Halteteil mit dem Tragrahmen verbunden. Dazu kann das hülsenförmige Halteteil den trageseitigen Rohrabschnitt z.B. vollumfänglich oder alternativ über einen Teil seines Umfangs, vorzugsweise über mehr als seinen halben Umfang, umgreifen. In einer vorteilhaften Realisierung umgreift das Halteteil den trageseitigen Rohrabschnitt in dessen gehäusebildendem, den Antriebsmotor und das Axialgebläse aufnehmendem Bereich. Das Halteteil kann je nach Bedarf z.B. einteilig oder mehrteilig, z.B. in Form zweier Halbschalen, als am Tragrahmen fixiertes Bauteil oder alternativ als mit dem Tragrahmen einstückiges Bauteil gebildet sein.

In einer Weiterbildung der Erfindung stützt sich das Schutzringelement am hülsenförmigen Halteteil und/oder direkt am Tragrahmen ab. Dies kann zu einer erhöhten Stoßfestigkeit beitragen, indem das Schutzringelement einwirkende Stoßkräfte zum dazu dann geeignet stoßfest ausgeführten Halteteil bzw. direkt zum Tragrahmen ableiten kann.

In einer Weiterbildung der Erfindung umgibt das Schutzringelement den axialen Blasrohr-Endabschluss mit einem radialen Abstand und/oder steht gegenüber dem axialen Blasrohr-Endabschluss axial um einen axialen Überstand vor. In diesem Fall kann das Schutzringelement für den Blasrohr-Endabschluss als ein radial und axial vorgelagerter Stoßschutz fungieren, so dass der Blasrohr-Endabschluss von einwirkenden Stoßkräften vollkommen freigehalten werden kann.

In einer Ausgestaltung der Erfindung ist einem axialen Rohrwandendbereich des trageseitigen Rohrabschnitts ein Luftleitkonus koaxial vorgelagert, wobei eine ringförmige radiale Lufteinlassöffnung gebildet ist. Der Luftleitkonus bildet eine trichterförmige axiale Außenbegrenzung eines dadurch radial mündenden, zugehörigen Lufteinlasskanals und bildet mit einem axial äußeren Ende den Blasrohr-Endabschluss. Der trageseitige Rohrabschnitt des Blasrohrs kann in seinem axialen Rohrwandendbereich optional korrespondierend trichter- bzw. konusförmig geformt sein, alternativ aber auch ohne konische Aufweitung axial enden.

An dieser Lufteinlassöffnung ist ein Lufteinlassgitter aus einem elastisch verformbaren Material angeordnet, wobei das Lufteinlassgitter den axialen Rohrwandendbereich des trageseitigen Rohrabschnitts kontaktfrei mit radialem Abstand wenigstens teilumfangsseitig umgibt und einerseits an einem axial äußeren Ende axial vor dem axialen Rohrwandendbereich des trageseitigen Rohrabschnitts mit dem Schutzringelement und andererseits an einem axial inneren Ende axial hinter dem axialen Rohrwandendbereich des trageseitigen Rohrabschnitts mit dem hülsenförmigen Halteteil und/oder dem Tragrahmen verbunden ist.

Diese Realisierung ermöglicht es, das Lufteinlassgitter als stoßabsorbierendes Element einzusetzen, indem es einer Stoßeinwirkung auf das steifer ausgeführte Schutzringelement elastisch verformend nachgeben und dadurch Stoßenergie aufnehmen und ableiten kann. Der axiale Rohrwandendbereich des trageseitigen Rohrabschnitts kann von einer etwaigen elastischen Verformung des auf diese Weise als Stoßschutzgitter wirkenden Lufteinlassgitters unbeeinflusst gehalten werden, da er keinen mechanischen Kontakt zu diesem hat. Dazu ist der radiale Abstand des Lufteinlassgitters vom axialen Rohrwandendbereich des trageseitigen Rohrabschnitts zweckmäßig so gewählt, dass er mindestens so groß sind wie die zu erwartenden Abstandsänderungen durch eine solche elastische Verformung des Lufteinlassgitters unter einer Stoßeinwirkung. Insgesamt stellt diese Ausgestaltung der Erfindung eine hinsichtlich Luftzufuhrfunktionalität und Stoßschutz sehr vorteilhafte Gestaltung dar.

In einer Weiterbildung der Erfindung umgibt das Schutzringelement den axialen Blasrohr-Endabschluss zumindest unterseitig. Damit kann das Schutzringelement speziell als Stoßschutz gegenüber Stoßeinwirkungen auf den Blasrohr-Endabschluss von unten wirken, wie sie z.B. beim Abstellen des Blasgerätes auf dem Boden oder beim versehentlichen Fallen des Blasgerätes auf den Boden auftreten können.

In einer Ausgestaltung der Erfindung umgibt das Schutzringelement den axialen Blasrohr-Endabschluss vollumfänglich, d.h. im Wesentlichen geschlossen entlang seines gesamten Umfangs, wobei im Bedarfsfall vergleichsweise kleine Umfangsbereiche von wenigen Umfangswinkelgraden freibleiben können. Dies realisiert einen entsprechend allseitigen Schutz dieses Blasrohr-Endabschlusses z.B. gegen Stoßeinwirkungen aus beliebigen radialen Richtungen.

In einer Weiterbildung der Erfindung beinhaltet das Schutzringelement einen mit dem Tragrahmen verbundenen Ringhalteabschnitt und einen vom Ringhalteabschnitt gewinkelt abführenden Schutzabschnitt, der den axialen Blasrohr-Endabschluss über einen Umfangswinkel von mindestens 180° umgibt. Dies stellt eine hinsichtlich konstruktiver Anbindung an den Tragrahmen und hinsichtlich Stoßschutz für den axialen Blasrohr-Endabschluss und Stoßkraftabführung vorteilhafte Gestaltung des Schutzringelements dar.

Vorteilhafte Ausführungsformen der Erfindung sind in den Zeichnungen dargestellt. Diese und weitere vorteilhafte Ausführungsformen der Erfindung werden nachfolgend näher beschreiben. Hierbei zeigen:
- Fig. 1: eine Perspektivansicht von hinten links auf ein rückengetragenes elektrisches Blasgerät,
- Fig. 2: eine Perspektivansicht des Blasgerätes von hinten rechts,
- Fig. 3: eine Draufsicht von hinten auf das Blasgerät,
- Fig. 4: eine Draufsicht von oben auf das Blasgerät,
- Fig. 5: eine rechte Seitenansicht des Blasgerätes,
- Fig. 6: eine linke Seitenansicht des Blasgerätes,
- Fig. 7: eine Schnittansicht längs einer Linie VII-VII in Fig. 3,
- Fig. 8: eine Schnittansicht längs einer Linie VIII-VIII in Fig. 4 und
- Fig. 9: eine Schnittansicht längs einer Linie IX-IX in Fig. 4.

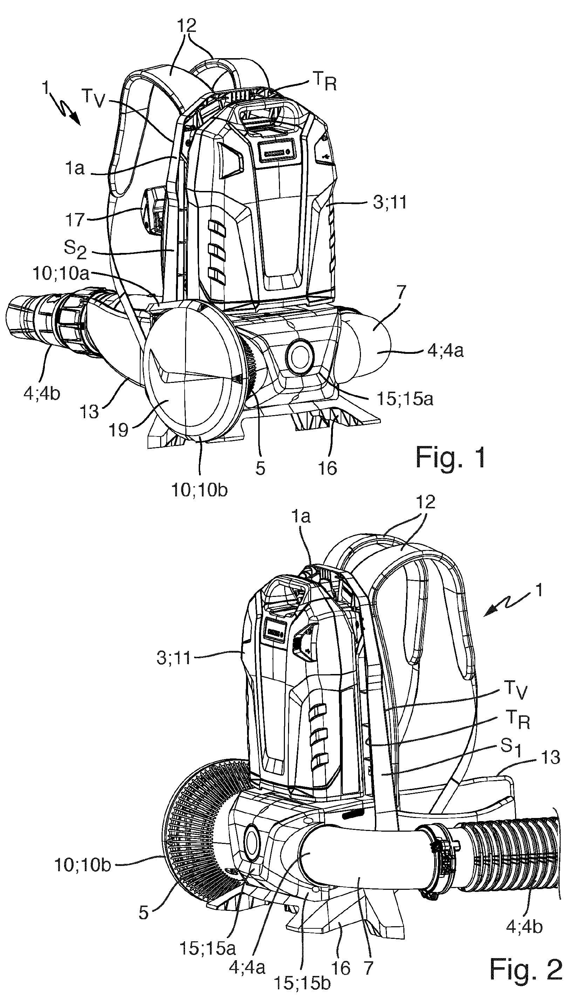

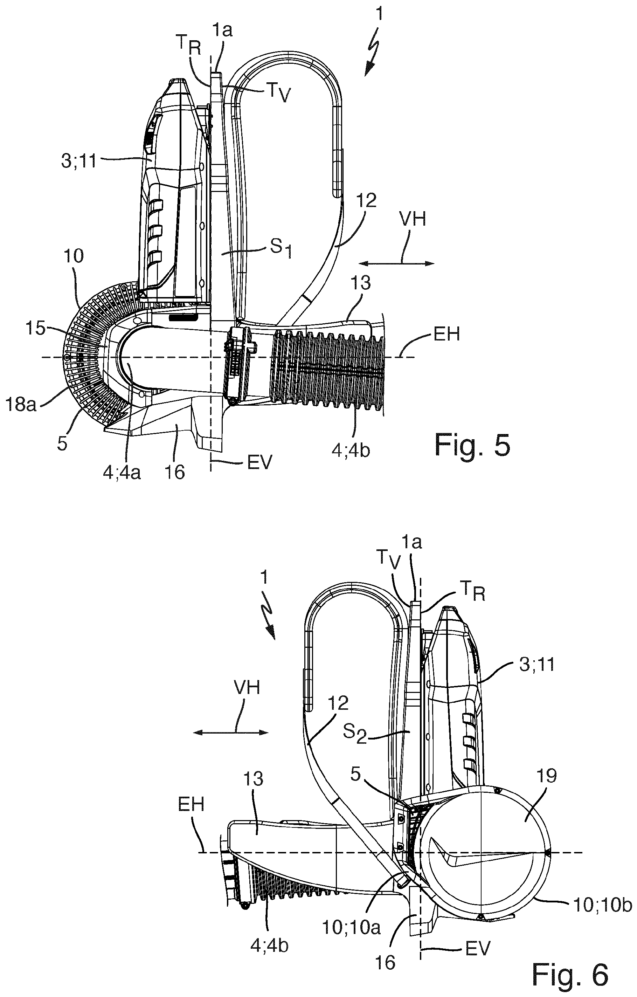

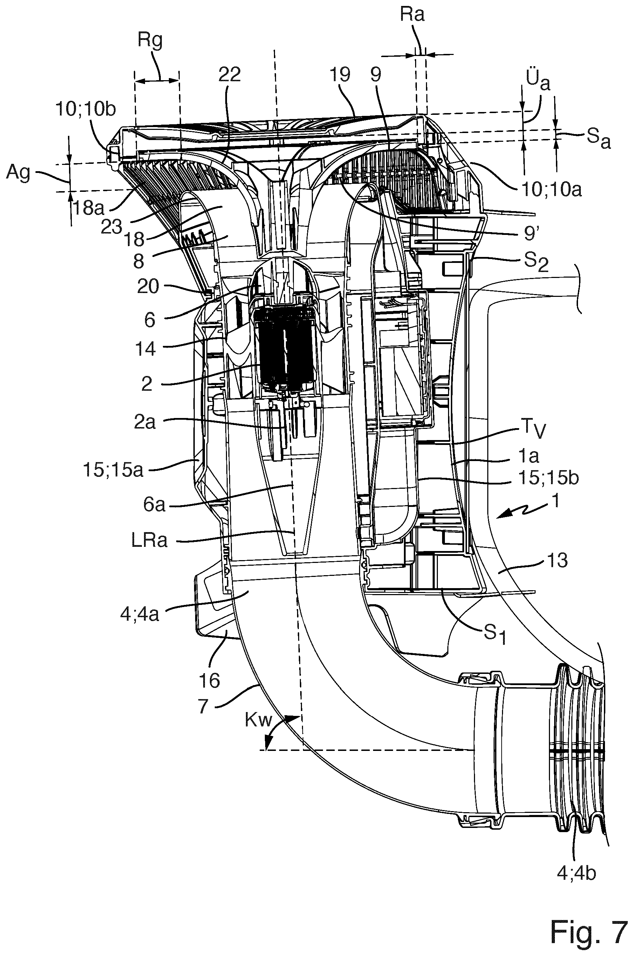

Wie in der gezeigten Ausführungsform gemäß den Fig. 1 bis 9 ersichtlich, beinhaltet das erfindungsgemäße rückengetragene Blasgerät eine Rückentrage 1, ein Blasrohr 4, einen Antriebsmotor 2, eine Energiequelle 3 für den Antriebsmotor 2 und ein vom Antriebsmotor 2 angetriebenes Axialgebläse 6. Die Rückentrage 1 weist einen Tragrahmen 1a auf, an dessen Rückseite ein trageseitiger Rohrabschnitt 4a des Blasrohrs 4 gehalten ist. Der trageseitige Rohrabschnitt 4a schließt axial mit einem axialen Blasrohr-Endabschluss 9 ab, wie insbesondere aus der Schnittdarstellung von Fig. 7 ersichtlich.

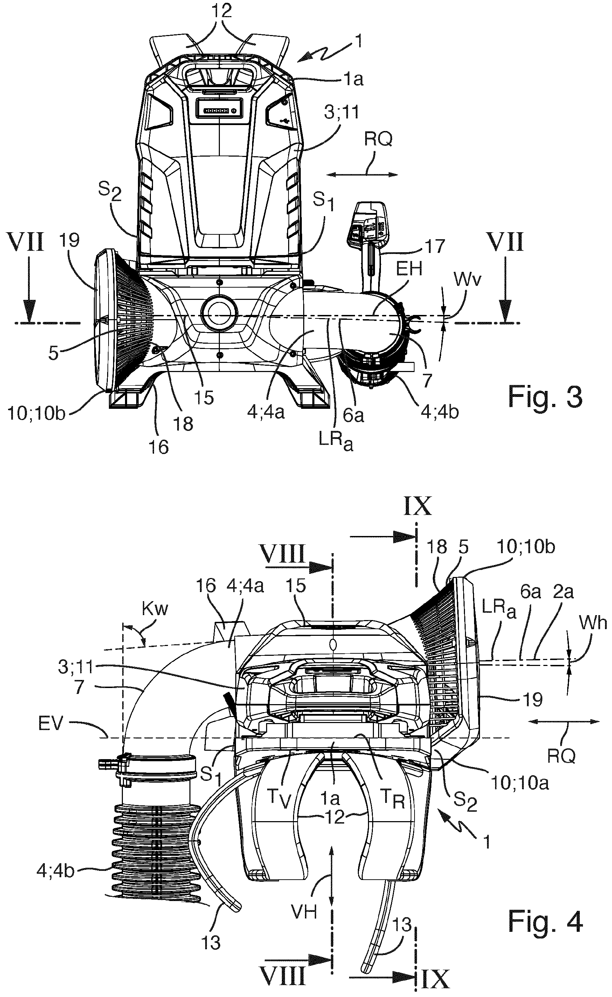

Des Weiteren beinhaltet das Blasrohr 4 einen handseitigen Rohrabschnitt 4b, der sich an einem ersten Seitenbereich S₁ des Tragrahmens 1a vorbei erstreckt, wie z.B. aus den Fig. 2 und 3 zu erkennen. Das Axialgebläse 6 weist eine axiale Gebläseachse 6a auf und ist im trageseitigen Rohrabschnitt 4a des Blasrohrs 4 angeordnet. Mittels des Axialgebläses 6 kann ein Blasmedium, vorzugsweise Luft, am einen Ende des Blasrohrs 4 angesaugt, durch das Blasrohr 4 hindurchgeleitet und am anderen Ende des Blasrohrs ausgeblasen werden.

In entsprechenden Ausführungen verläuft der trageseitige Rohrabschnitt 4a des Blasrohrs 4, wie im gezeigten Beispiel, mit einer Hauptrichtungskomponente in einer Tragequerrichtung RQ des Tragrahmens 1a, d.h. eine Längsachse LRₐ des trageseitigen Rohrabschnitts 4a erstreckt sich parallel zur Tragequerrichtung RQ oder, wie im gezeigten Beispiel, schräg dazu mit einer größeren Richtungskomponente parallel zur Tragequerrichtung RQ als in der dazu senkrechten Richtung.

In entsprechenden Ausführungen steht der trageseitige Rohrabschnitt 4a mit seinem axialen Blasrohr-Endabschluss 9, wie im gezeigten Beispiel, seitlich über einen dem ersten Seitenbereich S₁ abgewandten zweiten Seitenbereich S₂ des Tragrahmens 1a hinaus vor, wie aus Fig. 7 ersichtlich. Im gezeigten Beispiel sind der erste Seitenbereich S₁ des Tragrahmens 1a ein rechter Seitenbereich desselben und der zweite Seitenbereich S₂ ein linker Seitenbereich, in alternativen Ausführungen ist es umgekehrt.

In entsprechenden Ausführungen ist der axiale Blasrohr-Endabschluss 9, wie im gezeigten Beispiel, wenigstens teilumfangsseitig von einem Schutzringelement 10 umgeben, das mit dem Tragrahmen 1a verbunden ist.

Im gezeigten Ausführungsbeispiel ist das rückengetragene Blasgerät speziell ein elektrisches Blasgerät, d.h. der Antriebsmotor 2 ist ein Elektromotor, wobei es sich z.B. um ein elektrisches Laubblasgerät handeln kann. In letzterem Fall fungiert der Lufteinlasskanal 18 als Ansaugkanal. Als Energiequelle 3 fungiert in diesem Fall, wie bei den gezeigten Beispielen, ein am Tragrahmen 1a gehaltener Akkupack 11. Vorzugsweise ist hierbei, wie im gezeigten Beispiel, das Blasrohr 4 mit seinem trageseitigen Rohrabschnitt 4a in vertikaler Richtung unterhalb des Akkupacks 11 positioniert.

In alternativen Ausführungen kann das Blasgerät statt wie im gezeigten Beispiel vom ausblasenden Typ vom saugenden Typ sein und/oder mit einem Verbrennungsmotor als Gebläseantriebsmotor und einem Benzintank oder dergleichen als zugehöriger Energiequelle ausgerüstet sein.

Ein Benutzer kann das Blasgerät auf seinem Rücken tragen, wozu die Rückentrage 1 beim gezeigten Ausführungsbeispiel geeignete Trage- bzw. Schultergurte aufweist, die am Tragrahmen 1a befestigt sind, z.B. wie gezeigt zwei Schultergurte 12 und/oder eine Bauchgurteinheit 13. Im Tragezustand des Blasgerätes auf dem Rücken eines Benutzers ist der Tragrahmen 1a mit einer Vorderseite T_{V} dem Rücken des Benutzers zugewandt, mit einer Rückseite T_{R} diesem abgewandt. Die Tragequerrichtung RQ des Tragrahmens 1a verläuft in einer Horizontalebene senkrecht zu einer durch die Abstandsrichtung von Tragrahmen-Vorderseite T_{V} und Tragrahmen-Rückseite T_{R} definierten Vorn-Hinten-Richtung VH.

Wenn der Benutzer das Blasgerät, d.h. die Rückentrage 1, geschultert hat und auf dem Rücken trägt, kann er mit seiner entsprechenden, seitengleichen Hand den handseitigen Blasrohrabschnitt 4b greifen und führen, beim gezeigten Blasgerät mit seiner rechten Hand. Als Greifhilfe und zur Bedienung des Blasgerätes besitzt der handseitige Rohrabschnitt 4b des Blasrohrs 4 einen vorzugsweise nach oben abstehenden, zugehörigen Bediengriff 17.

In entsprechenden Realisierungen des Blasgerätes besitzt der Tragrahmen 1a, wie beim gezeigten Ausführungsbeispiel, einen Fußbereich 16, mit dem der Tragrahmen 1a bzw. die Rückentrage 1 auf dem Boden abgestellt werden kann.

In entsprechenden Ausführungen schließt die Gebläseachse 6a, wie im gezeigten Beispiel, einen in Fig. 4 explizit angegebenen Horizontalwinkel Wh zwischen 2° und 15° mit einer vertikalen Tragequerebene EV des Tragrahmens 1a ein. In speziellen Realisierungen liegt dieser Horizontalwinkel Wh im Bereich zwischen 2° und 3°.

In entsprechenden Ausführungen schließt die Gebläseachse 6a, wie im gezeigten Beispiel, einen in Fig. 3 explizit angegebenen Vertikalwinkel Wv von höchstens 45° mit einer horizontalen Trageebene EH des Tragrahmens 1a ein. In speziellen Realisierungen beträgt dieser Vertikalwinkel Wv höchstens 10°, wobei er beispielsweise 0° beträgt, wenn in einer zugehörigen Realisierung die Gebläseachse 6a horizontal und daher parallel zur horizontalen Trageebene EH bzw. zur Tragequerrichtung RQ des Tragrahmens 1a verläuft.

In vorteilhaften Ausführungsformen weist der trageseitige Rohrabschnitt 4a, wie beim gezeigten Ausführungsbeispiel, einen Krümmungsabschnitt 7 aus steifem Rohrmaterial mit einem Krümmungswinkel Kw kleiner als 90° auf. In speziellen Realisierungen liegt dieser Krümmungswinkel Kw im Bereich zwischen 60° und 85°. Im gezeigten Ausführungsbeispiel liegt der Krümmungswinkel Kw nahe bei 90°.

In entsprechenden Ausführungen besitzt der Antriebsmotor 2, wie im gezeigten Beispiel, eine zur Gebläseachse 6a parallele Motorachse 2a, wie in der Schnittansicht von Fig. 7 zu erkennen. Speziell fallen im gezeigten Beispiel die Gebläseachse 6a und die Motorachse 2a mit der Längsachse LRa des trageseitigen Rohrabschnitts 4a zusammen.

In entsprechenden Ausführungen ist der Antriebsmotor 2, wie im gezeigten Beispiel, im trageseitigen Rohrabschnitt 4a angeordnet. Alternativ kann er außerhalb desselben z.B. am Tragrahmen 1a angeordnet sein. Die Positionierung des Antriebsmotors 2 und des Axialgebläses 6 im trageseitigen Rohrabschnitt 4a beim gezeigten Beispiel ist speziell in der Schnittansicht von Fig. 7 zu erkennen.

In vorteilhaften Ausführungsformen sind der Antriebsmotor 2 und das Axialgebläse 6, wie beim gezeigten Ausführungsbeispiel, in einem gehäusebildenden Bereich 14 des trageseitigen Rohrabschnitts 4a angeordnet, mit dem der trageseitige Rohrabschnitt 4a gleichzeitig am Tragrahmen 1a mechanisch gehalten ist. Dazu ist ein hülsenförmiges Halteteil 15 vorgesehen, das den gehäusebildenden Bereich 14 des trageseitigen Rohrabschnitts 4a umgreift und am Tragrahmen 1a fixiert ist. Mit der Bezeichnung gehäusebildender Bereich ist hierbei gemeint, dass es sich um denjenigen Bereich des trageseitigen Rohrabschnitts 4a handelt, der den Antriebsmotor 2 und das Axialgebläse 6 gehäuseartig aufnimmt.

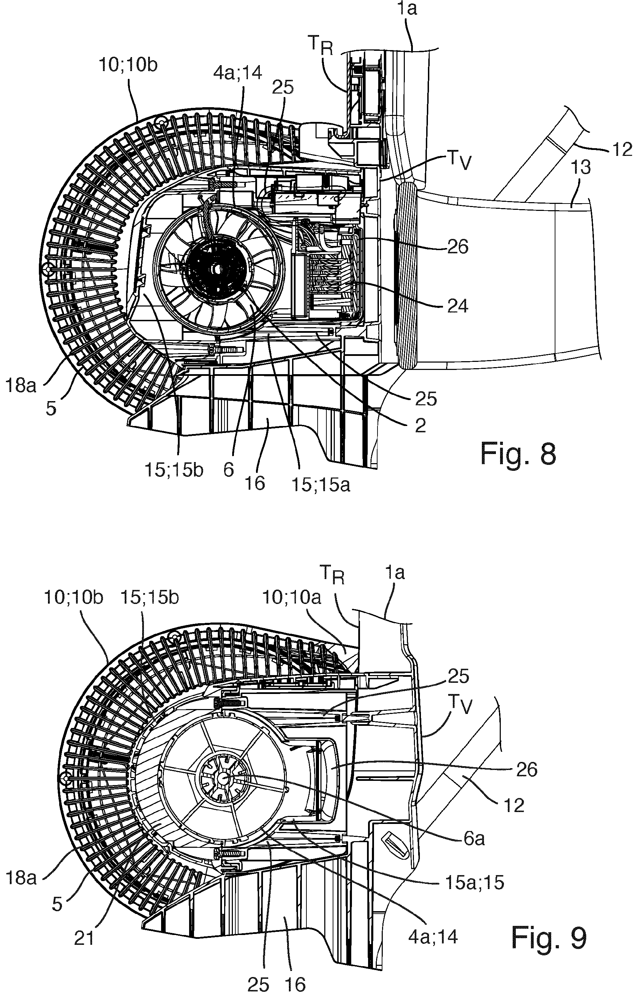

Im gezeigten Beispiel beinhaltet das Halteteil 15, wie insbesondere aus den Fig. 8 und 9 zu erkennen, eine vordere, am Tragrahmen 1a, z.B. wie gezeigt über Haltedome 25 und zugeordnete Schraubverbindungen, befestigte Halbschale 15a und eine hintere Halbschale 15b, die, z.B. wie gezeigt ebenfalls mittels Schraubverbindungen, an der vorderen Halbschale 15a fixiert ist und dabei den gehäusebildenden Bereich 14 des trageseitigen Rohrabschnitts 4a zwischen den beiden Halbschalen 15a, 15b festgeklemmt hält. Fixierende Rippen 21, wie sie in der Schnittansicht von Fig. 9 zu erkennen sind, sorgen für eine axiale und tangentiale Fixierung des gehäusebildenden Bereichs 14 des trageseitigen Rohrabschnitts 4a am hülsenförmigen Halteteil 15. Im gezeigten Beispiel weist die vordere Halbschale 15a eine zum Tragrahmen 1a hin weisende Ausbuchtung 26 auf, in der z.B. eine elektrische Steuerung 24 für den Gebläseantriebsmotor 2 geschützt untergebracht werden können. In alternativen Ausführungen kann das Halteteil 15 einteilig ausgebildet sein oder einen integralen Bestandteil des Tragrahmens 1a bilden.

In alternativen Realisierungen sind der Antriebsmotor 2 und das Axialgebläse 6 ohne gemeinsames Gehäuse im Inneren des trageseitigen Rohrabschnitts 4a angeordnet, der dann z.B. mit seiner Rohrwandung direkt am Tragrahmen 1a gehalten sein kann.

Vorzugsweise stützt sich das Schutzringelement 10 direkt am Tragrahmen 1a und/oder am hülsenförmigen Halteteil 15 ab. Dazu kann das Schutzringelement 10 direkt und/oder über das Halteteil 15 mechanisch mit dem Tragrahmen 1a verbunden sein. Alternativ stützt sich das Schutzringelement 10 zusätzlich oder ausschließlich über den trageseitigen Rohrabschnitt 4a am Tragrahmen 1a ab, wenn der trageseitige Rohrabschnitt 4a hierfür ausreichend steif ausgeführt ist.

In vorteilhaften Ausführungsformen umgibt das Schutzringelement 10 den axialen Blasrohr-Endabschluss 9 radial außenseitig mit einem radialen Abstand Ra und/oder steht gegenüber dem axialen Blasrohr-Endabschluss 9 um einen axialen Überstand Üa nach außen vor, wobei im gezeigten Beispiel beides realisiert ist, wie speziell in Fig. 7 zu erkennen. Dadurch kann das Schutzringelement 10 den Blasrohr-Endabschluss 9 gegen Stoßeinwirkungen in radialer bzw. axialer Richtung schützen, ohne mit ihm mechanisch in abstützender Verbindung zu stehen, indem Stöße in radialer bzw. axialer Richtung in aller Regel zunächst auf das Schutzringelement 10 einwirken, das die Stoßkräfte aufnehmen und direkt oder indirekt an den Tragrahmen 1a weiterleiten kann, wobei eine ausreichend allseitige Ausweichbewegung des Schutzringelements 10 gegenüber dem Blasrohr-Endabschluss 9 möglich ist. So ist z.B. der radiale Abstand Ra derart bemessen, dass er mindestens so groß ist wie die maximal zu erwartende, temporäre radiale Abstandsänderung des Schutzringelements 10 gegenüber dem Blasrohr-Endabschluss 9 durch eine solche Stoßeinwirkung.

In vorteilhaften Ausführungen weist das Blasgerät, wie im gezeigten Ausführungsbeispiel, einen Luftleitkonus 22, der einem axialen Rohrwandendbereich 23 des trageseitigen Blasrohrabschnitts 4a unter Bildung einer ringförmigen radialen Lufteinlassöffnung 18a koaxial vorgelagert ist, und ein an der Lufteinlassöffnung 18a angeordnetes Lufteinlassgitter 5 aus einem elastisch verformbaren Material auf. Der Luftleitkonus 22 schließt axial nach außen mit einer Abschlussplatte ab, die in diesem Fall den axialen Blasrohr-Endabschluss 9 bildet und einen axialen Abstand Ag zum axialen Rohrwandendbereich 23 des trageseitigen Blasrohrabschnitts 4a einhält, was einen effektiven Lufteintrittsquerschnitt für die radiale Lufteinlassöffnung 18a definiert. Das Lufteinlassgitter 5 umgibt den axialen Rohrwandendbereich 23 des trageseitigen Blasrohrabschnitts 4a kontaktfrei mit einem radialen Abstand Rg wenigstens teilumfangsseitig und ist einerseits an einem axial äußeren Ende mit dem Schutzringelement 10 und andererseits an einem axial inneren Ende mit dem hülsenförmigen Halteteil 15 verbunden, vorzugsweise axial hinter dem axialen Rohrwandendbereich 23 des trageseitigen Blasrohrabschnitts 4a.

Der Luftleitkonus 22 bildet eine luftdichte trichterförmige axiale Außenbegrenzung eines dadurch radial mündenden, zugehörigen Lufteinlasskanals 18 und ist am Motor-/Gebläseaufbau im trageseitigen Rohrabschnitt 4a gehalten. Der axiale Rohrwandendbereich 23 des trageseitigen Rohrabschnitts 4a des Blasrohrs kann, wie im gezeigten Beispiel, axial nach außen optional korrespondierend trichter- bzw. konusförmig geformt sein und auf diese Weise einen Lufteinlasstrichter 8 bilden. In diesem Fall ist der zum Gebläse 6 führende Lufteinlasskanal 18 anschließend an die ringförmige radiale Lufteinlassöffnung 18a axial beidseits von einer konus- bzw. trichterförmigen Leitfläche begrenzt. In alternativen Realisierungen endet der trageseitige Rohrabschnitt 4a am axialen Rohrwandendbereich 23 ohne konische Aufweitung.

Optional weist das Schutzringelement 10, wie im gezeigten Beispiel, einen axialen Abschlussdeckel 19 auf, der als axialer Abschluss des Schutzringelements 10 fungiert bzw. einen Bestandteil desselben bildet. Das Schutzringelement 10 ist in diesem Fall mit seinem Abschlussdeckel 19 axial nach außen um einen Spaltabstand Sa von der in diesem Fall den Blasrohr-Endabschluss 9 bildenden Abschlussplatte beabstandet, wie aus Fig. 7 ersichtlich. Der Spaltabstand Sa ermöglicht in dieser Ausführung eine axiale Ausweichbewegung des Abschlussdeckels 19 des Schutzringelements 10 gegenüber dem Blasrohr-Endabschluss 9 unter Stoßeinwirkung, wozu er analog zum oben erwähnten radialen Abstand Ra des Schutzringelements 10 entsprechend bemessen ist.

In alternativen Ausführungsvarianten wird auf den Luftleitkonus 22 verzichtet, so dass dann der axiale Blasrohr-Endabschluss 9 von einem axialen Stirnende 9' des axialen Rohrwandendbereichs 23 des trageseitigen Rohrabschnitts 4a gebildet ist, wie in Fig. 7 angedeutet. In diesem Fall hält dann das Schutzringelement 10 den besagten radialen Abstand Ra und mit seinem optionalen Abschlussdeckel 19 den besagten axialen Spaltabstand Sa zum axialen Stirnende 9' des axialen Rohrwandendbereichs 23 des trageseitigen Rohrabschnitts 4a ein.

Das Lufteinlassgitter 5 bildet eine das Blasmedium, insbesondere Luft, durchlassende Gitterstruktur, wobei eine radiale Einsaug- bzw. Ausblascharakteristik für das Blasrohr 4 an diesem Ende bereitgestellt wird, die durch den Luftleitkonus 22 axial nach außen geschlossen ist. Bei dieser Konfiguration kann somit Luft radial von außen in den Lufteinlasskanal 18 gelangen. Das Lufteinlassgitter 5 kann als stoßabsorbierendes Element fungieren und auf das Schutzringelement 10 einwirkende Stoßkräfte, z.B. bei einem Aufprall, elastisch verformend aufnehmen, was Schädigungen des Blasrohr-Endabschlusses 9 bzw. des Lufteinlasstrichters 8 vorbeugt. Das Lufteinlassgitter 5 kann sich hierbei im Rahmen seines radialen Abstands Rg relativ zum axialen Rohrwandendbereich 23 des trageseitigen Rohrabschnitts 4a bewegen, ohne diesen zu kontaktieren. Das biegeweiche Lufteinlassgitter 5 kann somit ohne Beeinträchtigung des axialen Rohrwandendbereichs 23 bzw. des Lufteinlasstrichters 8 insbesondere axial und/oder radial von außen auf das steifere Schutzringelement 10 einwirkende Stoßkräfte verformend abfangen und vom biegesteifen Schutzringelement 10 zum biegesteifen Halteteil 15 ableiten, das sie seinerseits zum Tragrahmen 1a ableiten kann.

Das Lufteinlassgitter 5 ist vorzugsweise, wie im gezeigten Beispiel, über eine z.B. aus Fig. 7 ersichtliche Formschlussverbindung 20 axial am hülsenförmigen Halteteil 15 abgestützt. Zusätzlich kann das Lufteinlassgitter 5 radial am hülsenförmigen Halteteil 15 fixiert sein, z.B. durch zugehörige Schraubverbindungen.

Wie genauer aus den Fig. 8 und 9 ersichtlich, ist das Lufteinlassgitter 5 im gezeigten Beispiel nicht ringförmig geschlossen ausgebildet, sondern besitzt eine in einem unteren Bereich offene Ringform, um dort Platz für den Fußbereich 16 des Tragrahmens 1a zu belassen, der dort insoweit den Ansaugraum bzw. die Lufteinlassöffnung 18a begrenzt und den axialen Blasrohr-Endabschluss 9 zusätzlich vor Stößen schützen kann. Das Lufteinlassgitter 5 kann je nach Bedarf einteilig vorgefertigt oder aus mehreren einzelnen Gitterteilen zusammengesetzt sein.

In vorteilhaften Ausführungsformen umgibt das Schutzringelement 10, wie beim gezeigten Beispiel, den axialen Blasrohr-Endabschluss 9 zumindest unterseitig. Damit ist das Schutzringelement 10 in der Lage, den axialen Blasrohr-Endabschluss 9 unterseitig vor Stoßeinwirkungen bzw. Schlageinwirkungen und dergleichen zu schützen. Alternativ umgibt es den axialen Blasrohr-Endabschluss 9 z.B. nur in einem rückseitigen Abschnitt.

In vorteilhaften Ausführungsformen umgibt das Schutzringelement 10, wie im gezeigten Beispiel, den axialen Blasrohr-Endabschluss 9 vollumfänglich, d.h. entlang von dessen gesamtem Umfang. Damit lässt sich der Blasrohr-Endabschluss 9 allseitig gegen Stoßeinwirkungen bzw. Schlageinwirkungen und dergleichen schützen.

In vorteilhaften Ausführungen beinhaltet das Schutzringelement 10, wie beim gezeigten Ausführungsbeispiel, einen mit dem Tragrahmen 1a verbundenen Ringhalteabschnitt 10a und einen vom Ringhalteabschnitt 10a gewinkelt abführenden, ringförmigen Schutzabschnitt 10b, der den axialen Blasrohr-Endabschluss 9 über einen Umfangswinkel von mindestens 180° umgibt. Im gezeigten Ausführungsbeispiel umgibt der Schutzabschnitt 10b den Blasrohr-Endabschluss 9 über dessen gesamten Umfangswinkel von 360° hinweg. Das Lufteinlassgitter 5 ist am Schutzabschnitt 10b und optional, wie im gezeigten Beispiel, auch am Ringhalteabschnitt 10a abgestützt. Des Weiteren kann in diesem Fall der Schutzabschnitt 10b als Halterung für den Abschlussdeckel 19 fungieren.

Wie die gezeigten und die weiteren oben erläuterten Ausführungsbeispiele deutlich machen, stellt die Erfindung in sehr vorteilhafter Weise ein rückengetragenes Blasgerät zur Verfügung, das als ausblasendes oder alternativ als ansaugendes Blasgerät konfiguriert sein kann, hinsichtlich seiner Blasmediumführung optimiert ist und eine kompakte Anordnung des Blasrohrs am Tragrahmen der Rückentrage, ggf. zusammen mit einem Akkupack als Energiequelle für den Gebläseantriebsmotor, ermöglicht. Die überwiegend horizontale und seitlich über den Tragrahmen hinaus vorstehende Anordnung des trageseitigen Rohrabschnitts des Blasrohrs begünstigt eine kompakte Bauweise mit optimaler Luftführung. Zusätzlich oder alternativ kann der Blasrohr-Endabschluss an seinem Umfang vollständig oder partiell durch das Schutzringelement vor äußeren mechanischen Einwirkungen geschützt werden. Zu einem kompakten Aufbau des Blasgerätes trägt zudem die Möglichkeit bei, das Blasrohr mit seinem trageseitigen Rohrabschnitt unterhalb des Akkupacks anordnen zu können.

## Patentansprüche

1. Rückengetragenes Blasgerät, insbesondere elektrisches Laubblasgerät, mit
- einer Rückentrage (1) mit einem Tragrahmen (1a),
- einem Blasrohr (4) mit einem an einer Rückseite des Tragrahmens (1a) gehaltenen trageseitigen Rohrabschnitt (4a) und einem handseitigen Rohrabschnitt (4b), der sich an einem ersten Seitenbereich (S₁) des Tragrahmens (1a) vorbei erstreckt,
- einem Antriebsmotor (2),
- einer Energiequelle (3) für den Antriebsmotor (2) und
- einem vom Antriebsmotor (2) angetriebenen Axialgebläse (6), das eine axiale Gebläseachse (6a) aufweist und im trageseitigen Rohrabschnitt (4a) des Blasrohrs (4) angeordnet ist,
- wobei der trageseitige Rohrabschnitt (4a) des Blasrohrs (4) mit einer Hauptrichtungskomponente in einer Tragequerrichtung (RQ) des Tragrahmens (1a) verläuft und einen axialen Blasrohr-Endabschluss (9) aufweist, der seitlich über einen dem ersten Seitenbereich (S₁) abgewandten zweiten Seitenbereich (S₂) des Tragrahmens (1a) hinaus vorsteht und/oder wenigstens teilumfangsseitig von einem Schutzringelement (10) umgeben ist, das mit dem Tragrahmen (1a) verbunden ist
**dadurch gekennzeichnet, dass**
- die Gebläseachse (6a) einen Horizontalwinkel (Wh) zwischen 2° und 15°, insbesondere zwischen 2° und 3°, mit einer vertikalen Tragequerebene (EV) des Tragrahmens (1a) einschließt.

2. Rückengetragenes Blasgerät nach Anspruch 1, weiter **dadurch gekennzeichnet, dass** die Gebläseachse (6a) einen Vertikalwinkel (Wv) von höchstens 45°, insbesondere von höchstens 10°, mit einer horizontalen Trageebene (EH) des Tragrahmens (1a) einschließt.

3. Rückengetragenes Blasgerät nach Anspruch 1 oder 2, weiter **dadurch gekennzeichnet, dass** der trageseitige Rohrabschnitt (4a) einen Krümmungsabschnitt (7) aus steifem Rohrmaterial mit einem Krümmungswinkel (Kw) kleiner als 90°, insbesondere zwischen 60° und 85°, aufweist.

4. Rückengetragenes Blasgerät nach einem der Ansprüche 1 bis 3, weiter **dadurch gekennzeichnet, dass** der Antriebsmotor (2) ein Elektromotor ist und die Energiequelle einen am Tragrahmen (1a) gehaltenen Akkupack (11) beinhaltet.

5. Rückengetragenes Blasgerät nach einem der Ansprüche 1 bis 4, weiter **dadurch gekennzeichnet, dass** der Antriebsmotor (2) eine zur Gebläseachse (6a) parallele Motorachse (2a) besitzt und/oder im trageseitigen Rohrabschnitt (4a) angeordnet ist.

6. Rückengetragenes Blasgerät nach Anspruch 5, weiter **dadurch gekennzeichnet, dass** der Antriebsmotor (2) und das Axialgebläse (6) in einem gehäusebildenden Bereich (14) des trageseitigen Rohrabschnitts (4a) angeordnet sind.

7. Rückengetragenes Blasgerät nach einem der Ansprüche 1 bis 6, weiter **dadurch gekennzeichnet, dass** der trageseitigen Rohrabschnitt (4a) durch ein hülsenförmiges Halteteil (15) mit dem Tragrahmen (1a) verbunden ist.

8. Rückengetragenes Blasgerät nach einem der Ansprüche 1 bis 7, weiter **dadurch gekennzeichnet, dass** der axiale Blasrohr-Endabschluss (9) wenigstens teilumfangsseitig von dem Schutzringelement (10) umgeben ist und sich das Schutzringelement (10) am hülsenförmiges Halteteil (15) und/oder direkt am Tragrahmen (1a) abstützt.

9. Rückengetragenes Blasgerät nach einem der Ansprüche 1 bis 8, weiter **dadurch gekennzeichnet, dass** der axiale Blasrohr-Endabschluss (9) wenigstens teilumfangsseitig von dem Schutzringelement (10) umgeben ist und das Schutzringelement (10) den axialen Blasrohr-Endabschluss (9) mit einem radialen Abstand (Ra) umgibt und/oder gegenüber dem axialen Blasrohr-Endabschluss (9) um einen axialen Überstand (Üa) vorsteht.

10. Rückengetragenes Blasgerät nach einem der Ansprüche 1 bis 9, weiter **gekennzeichnet durch**
- einen Luftleitkonus (22), der einem axialen Rohrwandendbereich (23) des trageseitigen Rohrabschnitts (4a) unter Bildung einer ringförmigen radialen Lufteinlassöffnung (18a) koaxial vorgelagert ist und mit einem axial äußeren Ende den Blasrohr-Endabschluss (9) bildet und
- ein an der Lufteinlassöffnung (18a) angeordnetes Lufteinlassgitter (5) aus einem elastisch verformbaren Material, das den axialen Rohrwandendbereich (23) des trageseitigen Rohrabschnitts (4a) kontaktfrei mit radialem Abstand (Rg) wenigstens teilumfangsseitig umgibt und einerseits an einem axial äußeren Ende axial vor dem Blasrohr-Endabschluss (9) mit dem Schutzringelement (10) und andererseits an einem axial inneren Ende axial hinter dem Blasrohr-Endabschluss (9) mit dem hülsenförmiges Halteteil (15) und/oder dem Tragrahmen (1) verbunden ist.

11. Rückengetragenes Blasgerät nach einem der Ansprüche 1 bis 10, weiter **dadurch gekennzeichnet, dass** der axiale Blasrohr-Endabschluss (9) wenigstens teilumfangsseitig von dem Schutzringelement (10) umgeben ist und das Schutzringelement (10) den axialen Blasrohr-Endabschluss (9) zumindest unterseitig umgibt.

12. Rückengetragenes Blasgerät nach Anspruch 11, weiter **dadurch gekennzeichnet, dass** der axiale Blasrohr-Endabschluss (9) wenigstens teilumfangsseitig von dem Schutzringelement (10) umgeben ist und das Schutzringelement (10) den axialen Blasrohr-Endabschluss (9) vollumfänglich umgibt.

13. Rückengetragenes Blasgerät nach einem der Ansprüche 1 bis 12, weiter **dadurch gekennzeichnet, dass** der axiale Blasrohr-Endabschluss (9) wenigstens teilumfangsseitig von dem Schutzringelement (10) umgeben ist und das Schutzringelement (10) einen mit dem Tragrahmen (1a) verbundenen Ringhalteabschnitt (10a) und einen vom Ringhalteabschnitt (10a) gewinkelt abführenden Schutzabschnitt (10b) umfasst, der den axialen Blasrohr-Endabschluss (9) über einen Umfangswinkel von mindestens 180° umgibt.

## Claims

1. Backpack blower, preferably electric leaf blower, comprising
- a backpack (1) having a load-bearing frame (1a),
- a blower tube (4) having a backpack-side tube section (4a) which is held on a rear side of the load-bearing frame (1a), and having a hand-side tube section (4b) which extends past a first side region (S₁) of the load-bearing frame (1a),
- a drive motor (2),
- an energy source (3) for the drive motor (2), and
- an axial fan (6) which is driven by the drive motor (2), has an axial fan axis (6a), and is arranged in the backpack-side tube section (4a) of the blower tube (4),
- wherein the backpack-side tube section (4a) of the blower tube (4) runs with a main direction component in a backpack transverse direction (RQ) of the load-bearing frame (1a) and has an axial blower tube end termination (9) which projects laterally beyond a second side region (S₂) of the load-bearing frame (1a), which second side region (S₂) faces away from the first side region (S₁), and/or is surrounded at least on a part of its circumference by a protective ring element (10) which is connected to the load-bearing frame (1a),
**characterized in that**
- the fan axis (6a) encloses a horizontal angle (Wh) between 2° and 15°, preferably between 2° and 3°, with a vertical backpack transverse plane (EV) of the load-bearing frame (1a).

2. Backpack blower according to Claim 1, further **characterized in that** the fan axis (6a) encloses a vertical angle (Wv) of at most 45°, preferably of at most 10°, with a horizontal load-bearing plane (EH) of the load-bearing frame (1a).

3. Backpack blower according to Claim 1 or 2, further **characterized in that** the backpack-side tube section (4a) has a curvature section (7) made from a rigid tube material with a curvature angle (Kw) of less than 90°, preferably between 60° and 85°.

4. Backpack blower according to one of Claims 1 to 3, further **characterized in that** the drive motor (2) is an electric motor, and the energy source comprises a rechargeable battery pack (11) which is held on the load-bearing frame (1a).

5. Backpack blower according to one of Claims 1 to 4, further **characterized in that** the drive motor (2) has a motor axis (2a) which is parallel to the fan axis (6a), and/or is arranged in the backpack-side tube section (4a).

6. Backpack blower according to Claim 5, further **characterized in that** the drive motor (2) and the axial fan (6) are arranged in a housing-forming region (14) of the backpack-side tube section (4a).

7. Backpack blower according to one of Claims 1 to 6, further **characterized in that** the backpack-side tube section (4a) is connected by way of a sleeve-shaped holding part (15) to the load-bearing frame (1a).

8. Backpack blower according to one of Claims 1 to 7, further **characterized in that** the axial blower tube end termination (9) is surrounded at least on a part of its circumference by the protective ring element (10) and the protective ring element (10) is supported on the sleeve-shaped holding part (15) and/or directly on the load-bearing frame (1a).

9. Backpack blower according to one of Claims 1 to 8, further **characterized in that** the axial blower tube end termination (9) is surrounded at least on a part of its circumference by the protective ring element (10) and the protective ring element (10) surrounds the axial blower tube end termination (9) at a radial spacing (Ra) and/or projects with respect to the axial blower tube end termination (9) by an axial overhang (Üa).

10. Backpack blower according to one of Claims 1 to 9, further **characterized by**
- an air guiding cone (22) which is arranged coaxially in front of an axial tube wall end region (23) of the backpack-side tube section (4a) with the formation of an annular radial air inlet opening (18a), and forms the blower tube end termination (9) with an axially outer end, and
- an air intake grille (5) which is made from an elastically deformable material, is arranged on the air inlet opening (18a), surrounds the axial tube wall end region (23) of the backpack-side tube section (4a) at least on a part of its circumference without contact at a radial spacing (Rg), and is connected on the one hand at an axially outer end axially in front of the blower tube end termination (9) to the protective ring element (10) and on the other hand at an axially inner end axially behind the blower tube end termination (9) to the sleeve-shaped holding part (15) and/or the load-bearing frame (1).

11. Backpack blower according to one of Claims 1 to 10, further **characterized in that** the axial blower tube end termination (9) is surrounded at least on a part of its circumference by the protective ring element (10) and the protective ring element (10) surrounds the axial blower tube end termination (9) at least on its underside.

12. Backpack blower according to Claim 11, further **characterized in that** the axial blower tube end termination (9) is surrounded at least on a part of its circumference by the protective ring element (10) and the protective ring element (10) surrounds the axial blower tube end termination (9) over its full circumference.

13. Backpack blower according to one of Claims 1 to 12, further **characterized in that** the axial blower tube end termination (9) is surrounded at least on a part of its circumference by the protective ring element (10) and the protective ring element (10) comprises a ring holding section (10a) which is connected to the load-bearing frame (1a), and a protective section (10b) which leads away in an angular manner from the ring holding section (10a) and surrounds the axial blower tube end termination (9) over a circumferential angle of at least 180°.

## Revendications

1. Souffleur dorsal, en particulier souffleur électrique de feuilles, avec
- un système de portage dorsal (1) avec un cadre de support (1a),
- un tuyau de soufflage (4) avec une section de tuyau côté portage (4a) maintenue sur un côté arrière du cadre de support (1a) et avec une section de tuyau côté main (4b), qui s'étend le long d'une première zone latérale (S₁) du cadre de support (1a),
- un moteur d'entraînement (2),
- une source d'énergie (3) pour le moteur d'entraînement (2) et
- une soufflante axiale (6) entraînée par le moteur d'entraînement (2), qui comporte un axe de soufflante axiale (6a) et est disposée dans la section de tuyau côté portage (4a) du tuyau de soufflage (4),
- la section de tuyau côté portage (4a) du tuyau de soufflage (4) s'étendant avec une composante de direction principale dans une direction transversale de support (RQ) du cadre de support (1a) et comportant une terminaison d'extrémité axiale (9) de tuyau de soufflage, qui fait saillie latéralement au-delà d'une deuxième zone latérale (S₂), opposée à la première zone latérale (S₁), du cadre de support (1a) et/ou est entourée au moins d'un côté périphérique partiel par un élément annulaire de protection (10), qui est relié au cadre de support (1a) **caractérisé en ce que**
- l'axe de soufflante (6a) forme un angle horizontal (Wh) compris entre 2° et 15°, en particulier entre 2° et 3°, avec un plan transversal de support vertical (EV) du cadre de support (1a).

2. Souffleur dorsal selon la revendication 1, **caractérisé en ce que** l'axe de soufflante (6a) forme avec un plan de support horizontal (EH) du cadre de support (1a) un angle vertical (WV) de 45° au maximum, en particulier de 10° au maximum.

3. Souffleur dorsal selon la revendication 1 ou 2, **caractérisé par** ailleurs en ce que la section de tuyau côté portage (4a) comporte un tronçon courbe (7) en un matériau de tuyau rigide avec un angle de courbure (Kw) inférieur à 90°, en particulier entre 60° et 85°.

4. Souffleur dorsal selon l'une des revendications 1 à 3, **caractérisé par** ailleurs en ce que le moteur d'entraînement (2) est un moteur électrique et la source d'énergie contient un bloc de batteries (11) maintenu sur le cadre de support (1a).

5. Souffleur dorsal selon l'une des revendications 1 à 4, **caractérisé par** ailleurs en ce que le moteur d'entraînement (2) possède un axe de moteur (2a) parallèle à l'axe de soufflante (6a) et/ou est disposé dans la section de tuyau côté portage (4a).

6. Souffleur dorsal selon la revendication 5, **caractérisé par** ailleurs en ce que le moteur d'entraînement (2) et la soufflante axiale (6) sont disposés dans une zone (14) formant boîtier de la section de tuyau côté portage (4a).

7. Souffleur dorsal selon l'une des revendications 1 à 6, **caractérisé par** ailleurs en ce que la section de tuyau côté portage (4a) est reliée au cadre de support (1a) par une pièce de maintien (15) en forme de douille.

8. Souffleur dorsal selon l'une des revendications 1 à 7, **caractérisé par** ailleurs en ce que la terminaison d'extrémité axiale (9) de tuyau de soufflage est entourée au moins d'un côté périphérique partiel par l'élément annulaire de protection (10) et l'élément annulaire de protection (10) prend appui sur la partie de maintien (15) en forme de douille et/ou directement sur le cadre de support (1a).

9. Souffleur dorsal selon l'une des revendications 1 à 8, **caractérisé par** ailleurs en ce que la terminaison d'extrémité axiale (9) de tuyau de soufflage est entourée au moins d'un côté périphérique partiel par l'élément annulaire de protection (10) et l'élément annulaire de protection (10) entoure la terminaison d'extrémité axiale (9) de tuyau de soufflage à une distance radiale (Ra) et/ou fait saillie d'un débord axial (Üa) par rapport à la terminaison d'extrémité axiale (9) de tuyau de soufflage.

10. Souffleur dorsal selon l'une des revendications 1 à 9, **caractérisé par** ailleurs par
- un cône de guidage d'air (22), qui est monté coaxialement en amont d'une zone d'extrémité de paroi de tuyau axiale (23) de la section de tuyau côté portage (4a) tout en formant une ouverture d'entrée d'air radiale annulaire (18a) et forme la terminaison d'extrémité (9) de tuyau de soufflage avec une extrémité axialement extérieure et
- une grille d'entrée d'air (5) disposée sur l'ouverture d'entrée d'air (18a) composée d'un matériau élastiquement déformable, qui entoure au moins du côté périphérique partiel la zone d'extrémité de paroi de tuyau axiale (23) de la section de tuyau côté portage (4a) sans contact à une distance radiale (Rg) et est reliée d'une part sur une extrémité axialement extérieure axialement devant la terminaison d'extrémité (9) de tuyau de soufflage à l'élément annulaire de protection (10) et d'autre part sur une extrémité axialement intérieure axialement derrière la terminaison d'extrémité (9) de tuyau de soufflage à la partie de maintien (15) en forme de douille et/ou au cadre de support (1).

11. Souffleur dorsal selon l'une des revendications 1 à 10, **caractérisé par** ailleurs en ce que la terminaison d'extrémité axiale (9) de tuyau de soufflage est entourée au moins du côté périphérique partiel par l'élément annulaire de protection (10) et l'élément annulaire de protection (10) entoure au moins côté inférieur la terminaison d'extrémité axiale (9) de tuyau de soufflage.

12. Souffleur dorsal selon la revendication 11, **caractérisé par** ailleurs en ce que la terminaison d'extrémité axiale (9) de tuyau de soufflage est entourée au moins du côté périphérique partiel par l'élément annulaire de protection (10) et l'élément annulaire de protection (10) entoure complètement la terminaison d'extrémité axiale (9) de tuyau de soufflage.

13. Souffleur dorsal selon l'une des revendications 1 à 12, **caractérisé par** ailleurs en ce que la terminaison d'extrémité axiale (9) de tuyau de soufflage est entourée au moins du côté périphérique partiel par l'élément annulaire de protection (10) et l'élément annulaire de protection (10) comprend une section de maintien d'anneau (10a) reliée au cadre de support (1a) et une section de protection (10b) s'éloignant selon un angle de la section de maintien d'anneau (10a), qui entoure la terminaison d'extrémité axiale (9) de tuyau de soufflage sur un angle périphérique d'au moins 180°.
